# EUROPÄISCHE PATENTSCHRIFT

(11) **EP 3 556 199 B1**
(45) Veröffentlichungstag und Bekanntmachung des Hinweises auf die Patenterteilung: **22.12.2021**
(21) Anmeldenummer: 19000183.4
(22) Anmeldetag: 15.04.2019
(51) Int. Cl.: A01D 78/10

(54) **LANDWIRTSCHAFTLICHE HEUWERBUNGSMASCHINE**
AGRICULTURAL HAY-MAKING MACHINE
MACHINE DE FENAISON AGRICOLE

(30) Priorität: 17.04.2018 DE 102018003099
(43) Veröffentlichungstag der Anmeldung: 23.10.2019
(73) Patentinhaber: Maschinenfabrik Bernard Krone GmbH & Co. KG, 48480 Spelle (DE)
(72) Erfinder: Afting, Andreas, 48488 Emsbüren (DE)

(56) Entgegenhaltungen:
- DE-A1- 3 739 114
- DE-A1- 3 902 927
- DE-C2- 3 739 114
- DE-U1- 9 111 676
- DE-U1- 9 316 973
- DE-U1- 9 409 143

## Beschreibung

Die Erfindung betrifft eine landwirtschaftliche Heuwerbungsmaschine zum Zetten und Wenden von landwirtschaftlichem Halm- oder Blattgut zum Anbau an einen Dreipunkt-Kraftheber einer Zugmaschine gemäß dem Oberanspruch des Patentanspruchs 1.

Derartige Heuwerbungsmaschinen sind aus dem Stand der Technik in verschiedenen Ausführungsformen bekannt und dienen dazu, die Trocknung von auf einem Feld- oder Wiesenboden liegenden, landwirtschaftlichen Halm- und Blattgut zu unterstützen bzw. zu beschleunigen. Das Zetten oder Wenden von landwirtschaftlichem Halm- oder Blattgut erfolgt dabei durch um eine etwa vertikale Achse rotierend umlaufende Zettkreisel, die mit sich zum Feldboden erstreckenden Federzinken an der, in Bezug zur Fahrtrichtung, vorderen Seite der Zettkreisel das Erntegut vom Feldboden aufnehmen und es an der Hinterseite der Zettkreisel angeschlagen und/oder gewendet auf dem Feldboden ablegen. Durch das Abknicken des Ernteguts und/oder dem Wenden kann die enthaltene Feuchtigkeit schneller entweichen, was die beschleunigte Trocknung des Ernteguts bewirkt. Der Einfachheit halber werden landwirtschaftliche Heuwerbungsmaschinen zum Zetten und Wenden im Folgenden als "Wender" bezeichnet. Um einen Wender über Straßen zu einem Feld oder einer Wiese zu transportieren, sind verschiedene Varianten bekannt. Generell wird hierbei zwischen angebauten und gezogenen Maschinen unterschieden. Der Unterschied besteht darin, dass angebaute Maschinen zum Transport von der Zugmaschine angehoben und ohne Bodenkontakt befördert werden. Gezogene Maschinen hingegen verfügen über ein eigenes Fahrwerk, mit dessen Hilfe sie über die Straßen transportiert werden. In einigen Fällen werden auch die Tasträder der Zettkreisel als Fahrwerk für den Straßentransport eingesetzt.

Um das Nachlaufverhaltens von angebauten Wendern während der Arbeitsstellung auf einem Feld oder einer Wiese zu verbessern, werden Stabilisierungselemente eingesetzt. Diese Stabilisierungselemente werden landläufig als Dämpferstreben bezeichnet. Bei den Dämpferstreben werden mechanische oder hydraulische Kraftspeicher, beispielsweise Spiralfedern oder hydraulische Zylinder mit Druckspeicher, eingesetzt. Kommt es aufgrund widriger Bodenverhältnisse zu Pendelbewegungen des Wenders am Anbaubock, nehmen die Stabilisierungselemente den Schwung aus der Pendelbewegung. Dadurch wird ein Aufschaukeln des Wenders quer zur Fahrrichtung verhindert. Abgesehen von einem unsauberen Arbeitsergebnis würde ein Aufschaukeln des Wenders klare Sicherheitsrisiken für den Bediener der Zugmaschine und die Zugmaschine selbst darstellen. Die Dämpferstreben sind also während des Arbeitseinsatzes unerlässlich.

Das Abstellen eines angebauten Wenders nach seinem Einsatz erfolgt üblicherweise in bekannter Reihenfolge. Die zuvor erwähnten Stabilisierungselemente sind während der Transportstellung durch das Gewicht des Wenders bis zu einen Anschlag eingefahren. Die Maschine wird durch den Dreipunkt-Kraftheber der Zugmaschine abgesenkt. Hierbei erreichen die Tasträder des Wenders in der Regel zuerst die Abstellfläche. Je weiter der angebaute Wender nun abgesetzt wird, desto mehr fahren die Stabilisierungselemente wieder aus. Dadurch wird der Wender etwa in Höhe des Unterlenkers entgegen der Fahrtrichtung verschoben. Durch die Tasträder ist diese Bewegung relativ problemlos. Zuletzt erreichen ein oder zwei Abstellstützen, welche sich zumeist am Dreipunkt-Anbaubock des Wenders befinden, die Abstellfläche.

Wender werden nach der Erntesaison in der Regel für mehrere Monate zur platzsparenden Überwinterung bevorzugt in der Transportstellung außer Betrieb gestellt. Die daraus resultierende Belastung der Tasträder ist langwierig und einseitig. Dadurch besteht die Gefahr, dass die Tasträder bis zu dem nächsten Einsatz nicht oder nur bedingt einsatzbereit sind. Denn durch die lange andauernde und einseitige Belastung kann es zu einer plastischen Verformung der Tasträder kommen. Das wiederum kann während des Arbeitseinsatzes zu Schäden an der Grasnarbe und somit zu Verunreinigung des Ernteguts führen. Durch einen unrunden Lauf der während der Außerbetriebstellung belasteten Tasträder kann ein knapp eingestellter Zettkreisel mit seinen Zinken mit der Grasnarbe in Berührung geraten. Darüber hinaus bewirkt die Belastung der Tasträder eine verfrühte Sprödigkeit der Tasträder. Höhere Wartungskosten und/oder schlimmstenfalls Maschinenausfälle sind die logische Konsequenz.

Im Stand der Technik sind Abstützvorrichtungen bekannt, welche in der Lage sind, die Tasträder des Wenders beim Abstellen zu entlasten. So z.B. werden in der DE 39 02 927 C2 "teleskopartig ineinander verschiebbare Abstellfüße" an den seitlich nach oben verschwenkbaren Seitenteilen des Maschinenrahmens vorgeschlagen. Allerdings wird hierzu eine massive Rahmenkonstruktion benötigt. Denn die Abstellfüße müssen bei der Absenkbewegung angebauter Wender die Bewegung durch die Dämpferstreben schadlos aushalten. Und auch bei ausreichender Stabilität des Rahmens, bzw. der Abstützvorrichtung wird das Rahmenmaterial bei einer Abstellbewegung über den Boden gedrückt. Entsprechende Schäden an Wender und Boden müssen bedacht werden. Wird darüber hinaus der Platz zwischen dem befestigten Abstellplatz und gegebenenfalls unbefestigtem Bereich dahinter falsch eingeschätzt, besteht darüber hinaus die Gefahr, dass die Abstellstützen über den Rand einer befestigten Fläche geschoben werden. In diesem Fall steht der Wender zunächst bestenfalls sicher auf den Tasträdern und den Stützen des Anbaubocks. Allerdings wird bei dieser Konstruktion mit hoch liegendem Schwerpunkt, ebendieser womöglich ungünstig verschoben. Dadurch kann ein kleiner Impuls ausreichen, den Wender zu kippen. Zusätzlich wäre der Sinn der zusätzlichen Abstellstützen aufgehoben, da die Tasträder wieder belastet werden. Aufgrund des erwähnten Schwerpunkts von in Transportposition befindlichen Wendern sind Richtlinien an die Hersteller erstellt worden. So muss ein Wender aus der Transportposition üblicherweise auf einer bis zu 8,5° schrägen Oberfläche standfest abgestellt werden können. Um die Standsicherheit zu gewährleisten, werden häufig zusätzliche Stützen eingesetzt. Diese lassen sich häufig jedoch erst nach dem Abstellvorgang an den Wender montieren. Entsprechend lassen sich Abstellstützen, welche die Tasträder beim Abstellen entlasten, nur mit entsprechendem hohen Aufwand anbringen.

Der vorliegenden Erfindung liegt demnach die Aufgabe zugrunde, den Stand der Technik um eine einfache und sichere Lösung zur Entlastung der Tasträder angebauter Heuwerbungsmaschinen zum Zetten und Wenden während der Stilllegung zu erweitern.

Gelöst wir die Aufgabe durch eine landwirtschaftliche Heuwerbungsmaschine zum Zetten und Wenden von landwirtschaftlichem Halm- oder Blattgut mit zumindest einer Abstellvorrichtung gemäß dem Kennzeichen des Anspruchs 1. Sinnvolle Erweiterungen und alternative Ausführungen gehen aus den Unteransprüchen sowie den Beschreibungen hervor. Die auftretenden Positions- und Richtungsangaben wie "oben", "unten", "links", "rechts", "vorne" und "hinten" entsprechen der Ansicht von hinter der erfindungsgemäßen Heuwerbungsmaschine stehend mit Sicht auf dessen in Fahrrichtung weisende Anbauvorrichtung.

Erfindungsgemäß wird diese Aufgabe durch eine landwirtschaftliche Heuwerbungsmaschine zum Zetten und Wenden von landwirtschaftlichem Halm- oder Blattgut gelöst, mit zumindest zwei um etwa vertikale Achsen in Rotation versetzbaren Zettkreiseln, welche ihrerseits mehrere mit wenigstens einem Zinken besetzte Zinkenträger aufweisen und sich wenigstens während einer Arbeitsstellung mittels wenigstens je einem Tastrad auf dem Boden abstützen, mit einem Maschinenrahmen, der eine schwenkbare Anbauvorrichtung zum Befestigen an einen Dreipunkt-Kraftheber einer Zugmaschine aufweist, wobei wenigstens ein Stabilisierungselement zur Stabilisierung der schwenkbaren Anbauvorrichtung während des Arbeitseinsatzes vorgesehen ist, welches zwischen der Anbauvorrichtung und dem Maschinenrahmen positioniert ist, der Maschinenrahmen zwischen einer Arbeitsstellung und einer Transportstellung verstellt werden kann und weiterhin eine Abstellvorrichtung aufweist, die aus wenigstens zwei Abstellelementen besteht, welche dazu vorgesehen sind, die Tasträder wenigstens während eines Abstellvorgangs zumindest teilweise zu entlasten, wobei die Abstellvorrichtung zumindest eine Führung aufweist, welche zumindest einem Abstellelement eine Ausgleichsbewegung während des Abstellvorgangs des Heuwerbungsmaschine erlaubt.

Das Stabilisierungselement verändert also bei dem Abstellvorgang seine Länge. Wie zuvor erwähnt bewirkt das Gewicht der Heuwerbungsmaschine ein vollständiges Einfahren des Stabilisierungselements während der vom Boden angehobenen Transportstellung. Die hierbei eingenommene Länge wird im Folgenden als I1 bezeichnet. Während des Abstellvorgangs erhält die Heuwerbungsmaschine Bodenkontakt. Dadurch wirkt die Gewichtskraft der Heuwerbungsmaschine nicht länger alleine auf das Stabilisierungselement. Dadurch können die in dem Stabilisierungselement verwendeten Kraftspeicher das Stabilisierungselement bis zum Erreichen seiner vollständig ausgefahrenen Länge, fortan als I2 gekennzeichnet, verfahren. Durch die beiden verschiedenen Längen ergibt sich I2 - I1= ΔI. Je nach Bauart der Heuwerbungsmaschine muss also wenigstens ein Teil dieser freigegebenen Länge ΔI von einer erfindungsgemäßen Abstellvorrichtung während des Abstellvorgangs ausgeglichen werden.

Im einfachsten Fall wird vorgeschlagen, ein Abstellelement an einer Achse gelagert mit der Führung zu versehen. Die Führung weist hierfür erfindungsgemäß ein Langloch auf, welches dem Abstellelement erlaubt, einen Weg zurückzulegen, den das Stabilisierungselement während des Abstellvorgangs erzwingt. Auch andere Führungselemente sind denkbar. Schienenelemente, Nuten oder Kulissenführungen sind nur ein paar Beispiele, welche eingesetzt werden können, um eine erfindungsgemäße Ausgleichsbewegung zu ermöglichen. Das Abstellelement und die Führung können hierzu beispielsweise mit einem Bolzen oder einem Führungselement, wie einem Nutenstein oder ähnlichen Bauteilen, in Eingriff gebracht werden.

Darüber hinaus wird vorgeschlagen, ein erfindungsgemäßes Abstellelement rückseitig des Maschinenrahmens anzubringen. Das Abstellelement und die Führung werden in einer bevorzugten Ausführung durch einen Halter mit dem Maschinenrahmen verbunden. Je nach Ausführung des Maschinenrahmens ist natürlich auch eine direktere Verbindung denkbar.

Um das Abstellelement nicht eigens für jeden Abstellvorgang montieren und für einen Arbeitseinsatz demontieren zu müssen wird vorgeschlagen, das Abstellelement zwischen einer Transportposition und einer Abstellposition verstellbar auszuführen. Im Fall eines mittels einer Achse an einer Führung gelagertem Abstellelement ergibt sich die einfache Möglichkeit, das Abstellelement an der Achse vom Boden entfernt zu verklappen. Dazu kann die Führung um eine Bohrung erweitert werden, sodass die Führung eine nach oben weisende Transportstellung des Abstellelements ermöglicht. Durch Umstecken eines Bolzens kann zwischen dem Langloch gewechselt werden, welches in Abstellposition die Ausgleichsbewegung ermöglicht und einer Bohrung wie grade erwähnt, welche das Abstellelement in seiner Transportposition sichert.
Alternativ scheint eine Führung interessant, welche eine teleskopierbare Verbringung des Abstellelements ermöglicht. Beispielsweise kann auch hier mit einem Bolzen das Abstellelement in einer eingefahrenen Position gesichert werden. Somit ist sichergestellt, dass das Abstellelement nicht versehentlich aus der Transportposition verfährt. Während der Transportposition und vor dem Abstellvorgang könnte man den Bolzen entfernen mit dem das Transportelement gesichert wird. Das Abstellelement lässt sich nun herunterziehen oder verfährt durch sein Eigengewicht in eine Abstellposition. Auch bei dieser Ausführung empfiehlt sich ein Langloch vorzusehen, um mittels zuvor entferntem Bolzen das Abstellelement in seiner Abstellposition zu sichern und dennoch eine Ausgleichsbewegung zu ermöglichen.

Eine bevorzugte Ausführung sieht vor, eine erfindungsgemäße Führung an einer rückseitigen Halterung am Maschinenrahmen anzuordnen. Die Führung weist dabei zwei vertikal ausgerichtete, parallel zur Fahrtrichtung ausgerichtete Ebenen auf, zwischen welchen eine Achse eingerichtet ist. Durch diese Achse wird das Abstellelement schwenkbar gelagert. Eine erste Ebene der Führung weist ein Langloch auf, welches von einem Bereich oberhalb der Achse beginnt und unterhalb der Achse den Umfang eines Halbkreises beschreibend verläuft. Die zweite Ebene weist eine Bohrung oberhalb der Achse, entlang dem beschriebenen Langloch der ersten Ebene auf. Durch einen Bolzen kann das Abstellelement entlang des Langlochs der ersten Ebene in der Bohrung der zweiten Ebene in einer Transportstellung gesichert werden. Die zweite Ebene weist außer der Bohrung noch ein Langloch auf, welches unterhalb der Achse entlang dem Langloch der ersten Ebene verläuft. Dieses Langloch ist ausgerichtet, dem Abstellelement den Weg Δs zu erlauben. Δs entspricht dabei dem Weg, der durch das Ausfahren des Stabilisierungselements durch die Abstellstütze ausgeglichen werden muss. Das Verhältnis von Δs zu ΔI ist dabei abhängig von der Anordnung der Abstellelemente zueinander, der Länge des erfindungsgemäßen Abstellelements sowie der Art und Ausführung des Stabilisierungselements und dessen Längen I1 und I2.

Eine weitere Option kann durch eine Kulissensteuerung ermöglicht werden. Die Kulissenführung könnte dazu zunächst ähnliche dem Langloch der zuvor beschriebenen ersten Ebene der Führung ausgeführt werden. An seinem unteren Ende könnte jedoch ein weiterer Abschnitt, oberhalb versetzt an das Langloch ausgeprägt sein. Durch die Gewichtskraft der Heuwerbungsmaschine wird der Kulissenstein nach dem Verschwenken in die Abstellposition während des Abstellvorgangs in diesen erhöhten Abschnitt gezwungen. Dieser Abschnitt gibt dann seinerseits die Ausgleichsbewegung des Abstellelements frei.

Ebenfalls geschickt scheint hier ein Federmechanismus, welche das Abstellelement zunächst während des Verstellvorgangs von der Transportposition in die Abstellposition abfängt, beispielsweise aus einer schwungvollen Bewegung zum Wechsel zwischen Transportposition und Abstellposition. Nun drückt dieser Federmechanismus das Abstellelement im Bereich seiner Führung bis zu einem günstigen Punkt. Bei einem rückseitig angebrachten Abstellelement sollte also der Federmechanismus den Abstand der Zettkreisel zum Abstellelement erhöhen. Dieser Punkt sollte so gewählt sein, dass die Führung in der Lage ist, die Strecke Δs freizugeben. Erreicht das Abstellelement während des Abstellvorgangs den Boden, wird nun die Federspannung überwunden, die Ausgleichsbewegung kann erfolgen. Um die Vorrichtung für verschiedene Bauarten nutzen zu können, bietet sich ein einstellbarer Federmechanismus ein. So kann beispielsweise mit einer Stellschraube der Punkt eingestellt werden, an den der Federmechanismus das Abstellelement zwingt, um eine benötigte Strecke optimal ausgleichen zu können.

Sinnvoll erweisen sich an dieser Stelle Hilfsmittel, welche die Änderung des Abstellelements von einer Transport- in ihre Abstellposition erleichtern. Dabei kommen viele altbekannte Mittel in Betracht, welche von der Kabine aus eine komfortable Änderung der Position des Abstellelements ermöglichen. Einfach scheint hier ein Seilzug zur Auslösung des Verstellvorgangs. Aber auch Fremdkraft nutzende Aktoren können zur weiteren Vereinfachung des Vorgangs eingesetzt werden. Besonders elektrische oder hydraulische Aktoren scheinen sinnvoll und praktisch. Dabei kann es beispielsweise ausreichen, das Abstellelement aus einer gesicherten Transportposition zu entriegeln. Die Positionsänderung könnte durch das Eigengewicht bereits eingeleitet werden. Andernfalls ist auch der Einsatz eines einfachen Hebelmechanismus oder einem Seilzug denkbar, welcher die Abstellstütze zeitgleich entsichert und einen ausreichenden Impuls zur Positionsänderung gibt. So kann die rückseitig an der Heuwerbungsmaschine angebrachte Abstellstütze einfach in Position gebracht werden.

**Bezugszeichenliste:**

| | | | |
|---|---|---|---|
| 1. | Heuwerbungsmaschine | B - | Boden |
| 2. | Zettkreisel | F - | Fahrtrichtung |
| 3. | Zinken | K1 ― | Kontaktfläche 1 |
| 4. | Zinkenträger | K2- | Kontaktfläche 2 |
| 5. | Tastrad | Z - | Zugmaschine |
| 6. | Maschinenrahmen | D - | Dreipunkt-Kraftheber |
| 7. | Anbauvorrichtung | I1 ― | Länge eingefahrenes Stabilisierungselement |
| 8. | Stabilisierungselement | | |
| 9. | Abstellvorrichtung | I2 - | Länge ausgefahrenes Stabilisierungselements |
| 10. | Abstellelement | | |
| 11. | Abstellelement | Δs― | Weg d. Ausgleichsbewegung |
| 12. | Haltevorrichtung | | |
| 13. | Führung | | |
| 14. | Anschlag | | |
| 15. | Verriegelung | | |
| 16. | Federmechanismus | | |
| 17. | Führungselement | | |
| 18. | Achse | | |

Nachfolgend wird eine bevorzugte Ausführungsform der Erfindung anhand einiger Zeichnungen näher beschrieben. Die Zeichnungen zeigen:
**FIG.1****:** eine landwirtschaftlichen Heuwerbungsmaschine nach dem Oberbegriff des Anspruchs 1, angebaut an einer Zugmaschine, wobei das erfindungsgemäße Abstellelement in Transportposition verweilt, in einer schematischen Ansicht von links;
**FIG.2****:** eine landwirtschaftlichen Heuwerbungsmaschine nach dem Oberbegriff des Anspruchs 1, angebaut an einer Zugmaschine, wobei das erfindungsgemäße Abstellelement in einer der Abstellposition nahen Zwischenposition während des Abstellvorgangs verweilt, in einer schematischen Ansicht von links;
**FIG.3****:** eine landwirtschaftliche Heuwerbungsmaschine gemäß dem Oberbegriff des Anspruchs 1, während der Abstellposition, wobei das erfindungsgemäße Abstellelement das Tastrad vom Boden fern hält, in einer Detailansicht von links;
**FIG.4****:** eine landwirtschaftliche Heuwerbungsmaschine gemäß dem Oberbegriff des Anspruchs 1, wobei das erfindungsgemäße Abstellelement in einer der Abstellposition nahen Zwischenposition während des Abstellvorgangs verweilt, in einer Detailansicht von rechts;
**FIG.5****:** eine landwirtschaftliche Heuwerbungsmaschine gemäß dem Oberbegriff des Anspruchs 1, während der Abstellposition, wobei das erfindungsgemäße Abstellelement das Tastrad vom Boden fern hält, in einer Detailansicht von rechts;

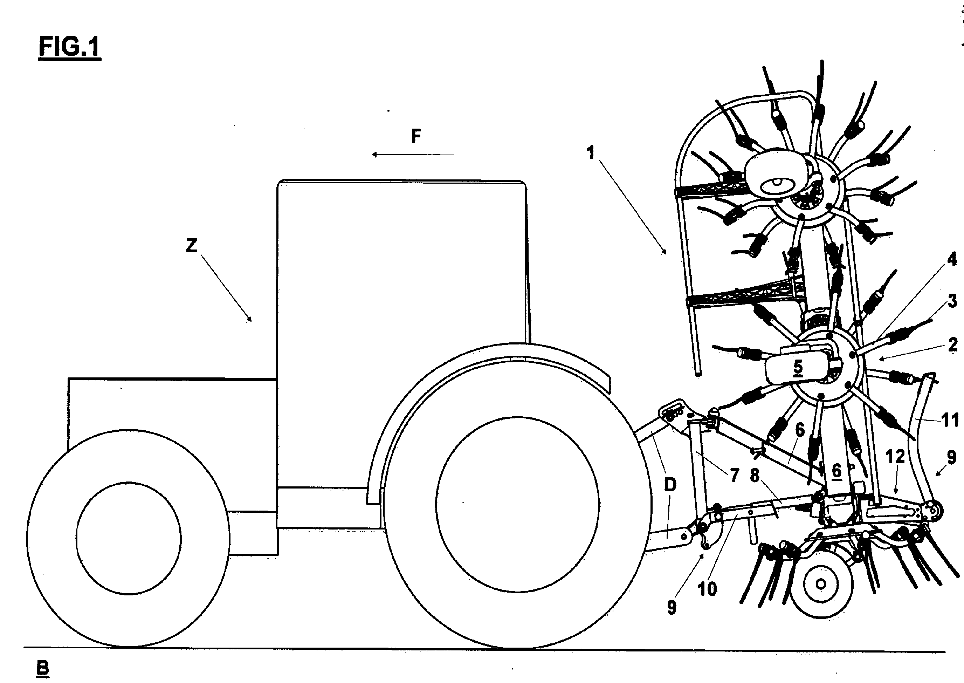

In der **FIG.1** ist eine sich in Transportstellung befindliche, an eine Zugmaschine Z angebaute, landwirtschaftliche Heuwerbungsmaschine 1 zum Zetten und Wenden von landwirtschaftlichem Halm- oder Blattgut zu erkennen. Die Heuwerbungsmaschine 1 verfügt dabei über einem dem Stand der Technik vertrauten Aufbau. Die zum Zetten und Wenden des Halm- und Blattguts eingesetzten Zettkreisel 2 verfügen über an Zinkenträgern 4 montierte Halm- und Blattgut aufnehmende Zinken 3. In Arbeitsstellung werden die Zettkreisel 2 um eine etwa vertikale Achse rotierend angetrieben. Während der Fahrt in Fahrtrichtung F über den Boden B stützt sich die Heuwerbungsmaschine 1 mit den Tasträdern 5 auf dem Boden B ab. Die Zettkreisel 2 sind hierzu an einem mehrteiligen Maschinenrahmen 6 angeordnet, welcher zum Transport über Straßen, wie dargestellt, platzsparend verklappen lässt. Die Zugmaschine Z ist durch ihren Dreipunkt-Kraftheber D in der Lage, die Heuwerbungsmaschine 1 vom Boden B abzuheben. Die Stabilisierungselemente 8 werden beim Anheben durch den Dreipunkt-Kraftheber D durch besagtes Eigengewicht der Heuwerbungsmaschine 1 bis auf einen Anschlag zusammengeschoben. Die Kraftspeicher der Stabilisierungselemente 8 sind somit außer Funktion gestellt. Darüber hinaus wird eine Abstellvorrichtung 9 bestehend aus Abstellelementen 10 und 11 in Transportposition dargestellt. Dabei ist das Abstellelement 10 an der Anbauvorrichtung 7 dem Stand der Technik bekannt. An der rückseitigen Haltevorrichtung 12 befindet sich ein neues, erfindungsgemäßes Abstellelement 11.

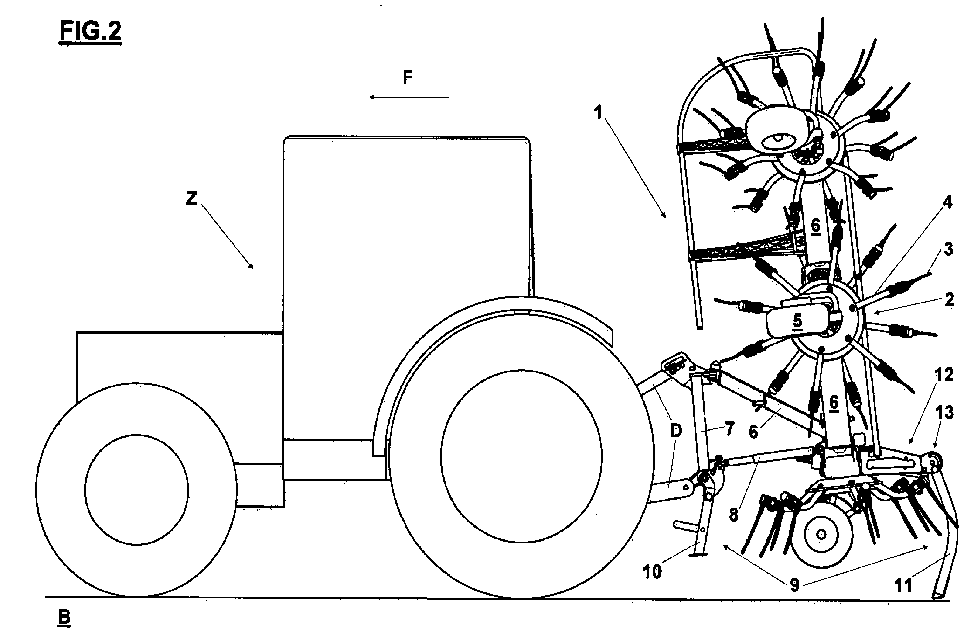

Die **FIG.2** ähnelt der **FIG.1** zu einem Großteil in ihrem Aufbau. Allerdings lässt sich relativ zügig erkennen, dass die Heuwerbungsmaschine 1 im Begriff ist, vom Dreipunkt-Kraftheber D der Zugmaschine Z auf den Boden B abgesetzt zu werden. Hierzu befindet sich das Abstellelement 10 an der Anbauvorrichtung 7 in seiner Abstellposition. Das Abstellelement 11 an der Haltevorrichtung 12 befindet sich in einer heruntergeklappten, der Abstellposition ähnelnden Zwischenposition. Ebenfalls erkennbar ist die relative große Länge des erfindungsgemäßen Abstellelements 11 im Vergleich zu einem aus dem Stand der Technik bekannten Abstellelement 10. Hierdurch soll sichergestellt werden, dass das erfindungsgemäße Abstellelement 11 den Boden B vor dem Abstellelement 10 und vor allem den Tasträdern 5 erreicht. Darüber hinaus soll in der Transportposition ausreichend Abstand zu den an Zinkenträgern 4 angeordneten Zinken 3 der Zettkreisel 2 eingehalten werden können.

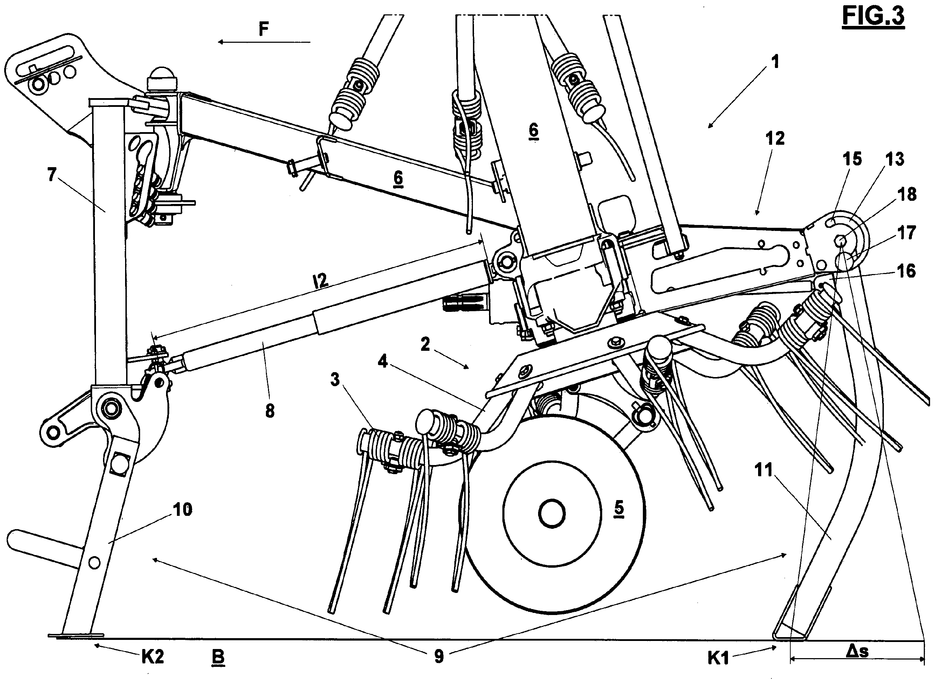

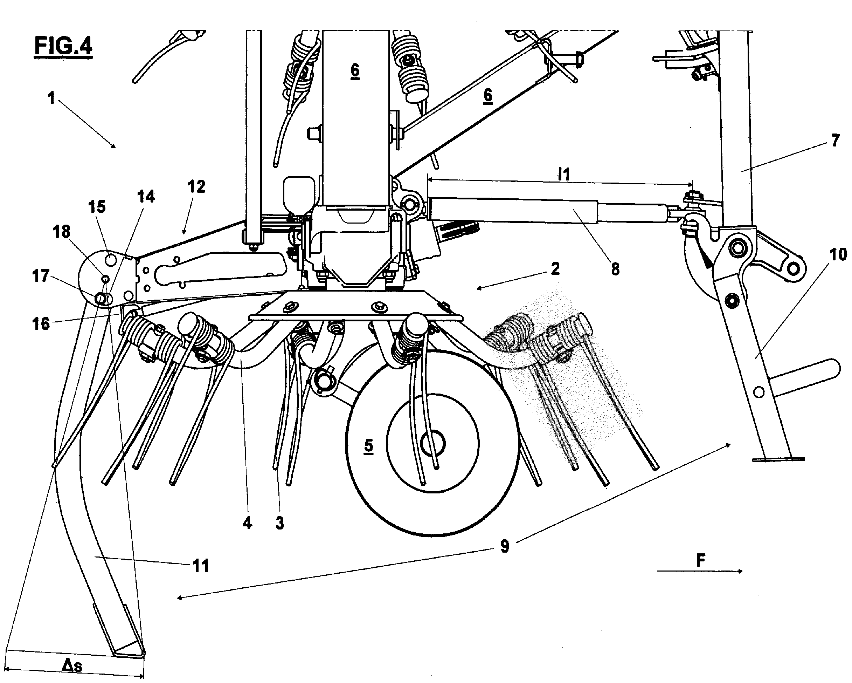

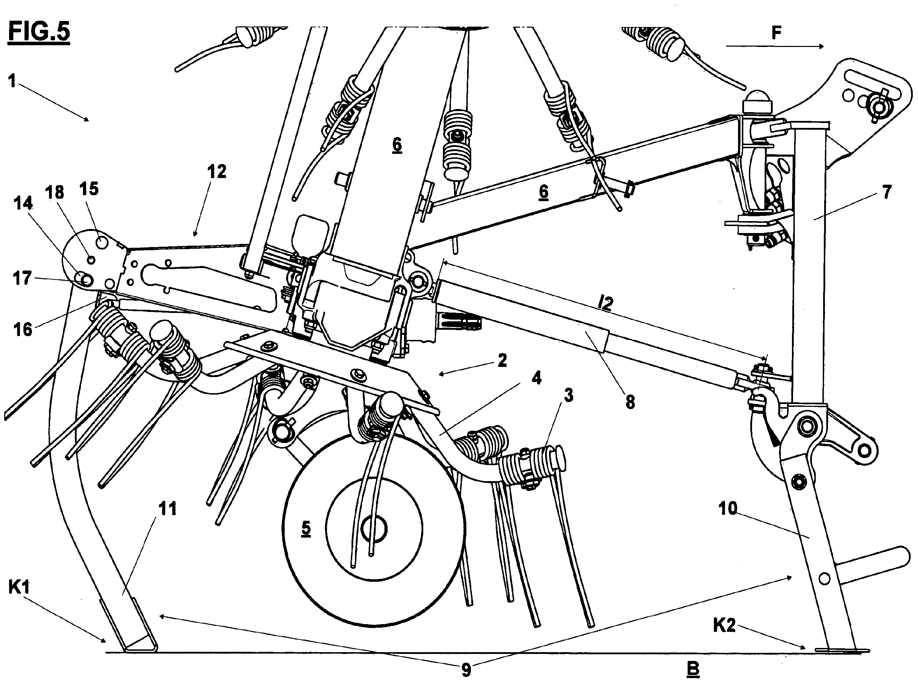

Die **FIG.3** zeigt die erfindungsgemäße Heuwerbungsmaschine 1 mit einer erfindungsgemäßen Abstellvorrichtung 9 und ihrer kennzeichnenden, rückseitig an einem Halteelement 11 angeordneten Abstellelement 11, dargestellt im abgestellten und von der Zugmaschine Z abgekoppelten Zustand. In dieser Detailansicht werden einige Aspekte besonders deutlich. So lässt sich zum Beispiel schnell erkennen, dass das dargestellte Stabilisierungselement 8 im Vergleich zu den vorangegangenen Figuren einen Zustand eingenommen hat, welcher dessen Arbeitsposition ähnelt. Das Tastrad 5 ist kurz vor dem Bodenkontakt, somit ist das Stabilisierungselement 8 größtenteils auf seine voll ausgefahrene Länge I2 expandiert. Weiterhin wird eine erfindungsgemäße Führung 13 für das Abstellelement 11 deutlich. Ein Führungselement 17 wie ein Nutenstein oder im dargestellten Beispiel ein Bolzen, wird in der dargestellten Ausführung mittels einer Feder gegen Verlust gesichert. Das Führungselement 17 wirkt bei ausreichender Klappbewegung an der Achse 18 direkt mit dem in **FIG.4** oder **FIG.5** erkennbaren Anschlag 14 oder der angedeuteten Verriegelung 15 zusammen. Dadurch kann das Abstellelement 11 in wahlweise der Transportposition oder einer der Abstellposition nahen Zwischenposition gesichert werden. Weiterhin kann unterhalb der Führung 13 ein Federmechanismus 16 ausgemacht werden. Dieser Federmechanismus 16 ist beispielsweise durch eine Spiralfeder oder eine Gasdruckfeder ausgeführt. Der Federmechanismus 16 ist einerseits mit dem Maschinenrahmen 6 verbunden. Wird jetzt das Abstellelement 11 an seiner Achse 18 entlang der Führung 13 heruntergeklappt, um die Abstellposition einzunehmen, fängt der Federmechanismus 16 das Abstellelement 11 zunächst auf und drückt es entgegen der Fahrtrichtung F. Dadurch wird das Abstellelement 11 zunächst in einer zuvor erwähnten, der Abstellposition ähnelnden Zwischenposition gehalten. Alternativ ist das Abstellelement 11 derart ausgeführt, dass sie während des Abstellvorgangs durch die an ihr wirkende Gewichtskraft im hinteren Bereich des Anschlags 14 verweilt, bis sie Kontakt mit dem Boden B herstellt. Durch den Kontakt mit dem Boden B wird das Führungselement 17 verschoben und erreicht einen Bereich der Führung 13 welche einem Anschlag 14 ähnelt, um hier den Weg der Ausgleichsbewegung Δs ausgleichen zu können.

Die Figuren **FIG.4** und **FIG.5** verdeutlichen sehr gut die unterschiedlichen Zustände des wenigstens einen Stabilisierungselements 8 und dessen verschiedene Längen I1 und I2 während den beiden nach unten weisenden Positionen des Abstellelements 11. Dabei zeigt die **FIG.4** die der Abstellposition des Abstellelement 11 ähnelnde Zwischenposition während die **FIG.5** die Abstellposition des Abstellelements 11 verdeutlich. Der Übergang von **FIG. 4** zu **FIG.5** geschieht in etwa wie folgt: Die Heuwerbungsmaschine 1 wird durch den Dreipunkt-Kraftheber D (nicht in FIG. 3-5 dargestellt) heruntergelassen. Zunächst gerät das Abstellelement 11 an der Kontaktfläche K1 mit dem Boden B in Kontakt. Das Abstellelement 11 befindet sich dabei in einer vom Zettkreisel 2 beabstandeten Zwischenposition. Diese ist auch an der Position des Führungselements 17 im hinteren Bereich des Anschlags 14 zu erkennen. Die Heuwerbungsmaschine 1 wird weiter abgesetzt, wobei das Abstellelement 11 auf der Kontaktfläche K1 stehen bleibt, aber um einen Punkt oder eine Grade in der Kontaktfläche K1 nach hinten kippt. Möglich wird diese Kippbewegung durch die Führung 13 und den Anschlag 14 in Verbindung mit dem Führungselement 17 und der Achse 18. Das Stabilisierungselement 8 erfährt nicht mehr die gesamte Gewichtskraft der Heuwerbungsmaschine 1 und die integrierten Kraftspeicher sorgen dafür, dass sich die Länge des Stabilisierungselements 8 von I1 auf I2 verändert. Die Heuwerbungsmaschine wird weiter abgesenkt, bis das Abstellelement 10 an der Kontaktfläche K2 den Boden berührt. Die Kippbewegung des Abstellelements 11 sowie die Entfaltung des Stabilisierungselements 8 sind beendet. Optimaler Weise hat die Abstellstütze 11 das vordere Ende des Anschlags, wie in **FIG.5** sichtbar, erreicht. In der Folge steht die Heuwerbungsmaschine 1 sicher auf dem Boden B. Zusätzlich ist, gemäß der Aufgabe der Erfindung, das wenigstens eine Tastrad 5 vom Boden B beabstandet, womit die Entlastung des Tastrades 5 sichergestellt ist.

## Patentansprüche

1. Landwirtschaftliche Heuwerbungsmaschine (1) zum Zetten und Wenden von landwirtschaftlichem Halm- oder Blattgut mit zumindest zwei um etwa vertikale Achsen in Rotation versetzbaren Zettkreiseln (2), welche ihrerseits mehrere mit wenigstens einem Zinken (3) besetzte Zinkenträger (4) aufweisen und sich wenigstens während einer Arbeitsstellung mittels wenigstens je einem Tastrad (5) auf dem Boden (B) abstützen, mit einem Maschinenrahmen (6), der eine schwenkbare Anbauvorrichtung (7) zum Befestigen an einen Dreipunkt-Kraftheber (D) einer Zugmaschine (Z) aufweist, wobei der Maschinenrahmen (6) zwischen einer Arbeitsstellung und einer Transportstellung verstellt werden kann und weiterhin eine Abstellvorrichtung (9) aufweist, die aus wenigstens zwei Abstellelementen (10,11) besteht, welche dazu vorgesehen sind, die Tasträder (5) wenigstens während eines Abstellvorgangs zumindest teilweise zu entlasten, **dadurch gekennzeichnet, dass** wenigstens ein Stabilisierungselement (8) zur Stabilisierung der schwenkbaren Anbauvorrichtung (7) während des Arbeitseinsatzes vorgesehen ist, welches zwischen der Anbauvorrichtung (7) und dem Maschinenrahmen (6) positioniert ist, und dass die Abstellvorrichtung (9) zumindest eine Führung (13) aufweist, welche zumindest einem Abstellelement (11) eine Ausgleichsbewegung während des Abstellvorgangs der Heuwerbungsmaschine (1) erlaubt.

2. Landwirtschaftliche Heuwerbungsmaschine (1) nach Anspruch 1, **dadurch gekennzeichnet, dass** die zumindest eine Führung (13) dazu eingerichtet ist, zumindest einen Teil des Wegs auszugleichen, den das wenigstens eine Stabilisierungselement (8) während des Abstellvorgangs freigibt.

3. Landwirtschaftliche Heuwerbungsmaschine (1) nach wenigstens einem der Ansprüche 1 und/oder 2, **dadurch gekennzeichnet, dass** die wenigstens eine Abstellvorrichtung (9) rückseitig des Maschinenrahmens (6) angeordnet ist.

4. Landwirtschaftliche Heuwerbungsmaschine (1) nach Anspruch 1 bis 3, **dadurch gekennzeichnet, dass** die zumindest eine Führung (13) dazu eingerichtet ist, die Verstellung eines Abstellelements (11) zwischen einer Transportposition und einer Abstellposition zuzulassen.

5. Landwirtschaftliche Heuwerbungsmaschine (1) nach zumindest einem der vorherigen Ansprüche, **dadurch gekennzeichnet, dass** sich eine Kontaktfläche (K1) des wenigstens einen Abstellelements (11) nach Bodenkontakt während des Abstellvorgangs nicht wesentlich verschiebt.

6. Landwirtschaftliche Heuwerbungsmaschine (1) nach zumindest einem der vorherigen Ansprüche, **dadurch gekennzeichnet, dass** die Führung (13) zumindest in Abstellposition über einen Anschlag (14) verfügt, der eine Ausgleichsbewegung in und entgegen der Fahrtrichtung (F) erlaubt.

7. Landwirtschaftliche Heuwerbungsmaschine (1) nach zumindest einem der vorherigen Ansprüche, **dadurch gekennzeichnet, dass** die Führung (13) einen Anschlag (14) aufweist, durch den das Abstellelement (11) zumindest in der Abstellposition gesichert werden kann.

8. Landwirtschaftliche Heuwerbungsmaschine (1) nach zumindest einem der vorherigen Ansprüche, **dadurch gekennzeichnet, dass** die Führung (13) eine Verriegelung (15) aufweist, durch den das Abstellelement (11) zumindest in der Transportposition gesichert werden kann.

9. Landwirtschaftliche Heuwerbungsmaschine (1) nach zumindest einem der vorherigen Ansprüche, **dadurch gekennzeichnet, dass** die Führung (13) bei Bodenkontakt des Abstellelements (11) einen Abschnitt erreicht, welcher der Führung (13) die Ausgleichsbewegung erlaubt.

10. Landwirtschaftliche Heuwerbungsmaschine (1) nach zumindest einem der vorherigen Ansprüche, **dadurch gekennzeichnet, dass** das rückseitige Abstellelement (11) vorrichtungsunterstützt von einer Zugmaschine (Z) aus zwischen einer Transportposition und einer Abstellposition verstellbar ist.

## Claims

1. Agricultural haymaking machine (1) for tedding and turning agricultural stalk or leaf material, comprising at least two rotary tedders (2) which can be set in rotation about approximately vertical axes, which rotary tedders in turn have a plurality of tine carriers (4) fitted with at least one tine (3) and which support themselves on the ground (B) by means of at least one roller feeler (5) each at least during a working position, comprising a machine frame (6) which has a pivotable attachment device (7) for attaching to a three-point power lift (D) of a tractor (Z), the machine frame (6) being adjustable between a working position and a transport position and furthermore having a parking device (9) which consists of at least two parking elements (10, 11) which are provided to at least in part relieve the roller feelers (5) at least during a parking process, **characterised in that** at least one stabilising element (8) for stabilising the pivotable attachment device (7) is provided during work, which element is positioned between the attachment device (7) and the machine frame (6), and **in that** the parking device (9) has at least one guide (13) which allows at least one parking element (11) a compensating movement during the parking process of the haymaking machine (1).

2. Agricultural haymaking machine (1) according to claim 1, **characterised in that** the at least one guide (13) is set up to compensate for at least one part of the path that the at least one stabilising element (8) clears during the parking process.

3. Agricultural haymaking machine (1) according to at least one of claims 1 and/or 2, **characterised in that** the at least one parking device (9) is arranged on the rear of the machine frame (6).

4. Agricultural haymaking machine (1) according to claims 1 to 3, **characterised in that** the at least one guide (13) is set up to allow a parking element (11) to be adjusted between a transport position and a parking position.

5. Agricultural haymaking machine (1) according to at least one of the preceding claims, **characterised in that** a contact surface (K1) of the at least one parking element (11) does not move significantly after contact with the ground during the parking process.

6. Agricultural haymaking machine (1) according to at least one of the preceding claims, **characterised in that** the guide (13) has, at least in the parking position, a stop (14) which allows a compensating movement in and counter to the direction of travel (F).

7. Agricultural haymaking machine (1) according to at least one of the preceding claims, **characterised in that** the guide (13) has a stop (14) by means of which the parking element (11) can be secured at least in the parking position.

8. Agricultural haymaking machine (1) according to at least one of the preceding claims, **characterised in that** the guide (13) has a lock (15) by means of which the parking element (11) can be secured at least in the transport position.

9. Agricultural haymaking machine (1) according to at least one of the preceding claims, **characterised in that** when the parking element (11) comes into contact with the ground, the guide (13) reaches a portion which allows the guide (13) the compensating movement.

10. Agricultural haymaking machine (1) according to at least one of the preceding claims, **characterised in that** the rear parking element (11) can be adjusted between a transport position and a parking position with the aid of a tractor (Z).

## Revendications

1. Machine agricole de fenaison (1) pour épandre et retourner des produits agricoles en tiges ou en feuilles, comprenant :
- au moins deux rotors d'épandage (2) mis en rotation autour d'un axe sensiblement vertical, et qui ont chacun plusieurs porte-dents (4) munis d'au moins une dent (3) et qui au moins dans une position de travail, s'appuient sur le sol (B) à l'aide, chacun, d'au moins une roue palpeuse (5),
- un châssis de machine (6) ayant un dispositif d'attelage pivotant (7) pour la fixation à un dispositif élévateur d'attelage à trois points (D) d'un tracteur (Z),
- le châssis de machine (6) pouvant être déplacé entre une position de travail et une position de transport et il comporte en outre un dispositif de pose (9) qui se compose d'au moins deux éléments d'appui (10, 11) prévus pour soulager au moins partiellement les roues palpeuses (5) au moins pendant une phase de pose,
machine **caractérisée en ce que**
il est prévu au moins un élément de stabilisation (8) pour stabiliser le dispositif d'attelage pivotant (7) pendant le travail, et il se trouve entre le dispositif d'attelage (7) et le châssis (6) de la machine, et
le dispositif de pose (9) comprend au moins un guide (13) qui permet à au moins un élément d'appui (11) d'effectuer un mouvement de compensation pendant la phase de dépose de la machine de fenaison (1).

2. Machine agricole de fenaison (1) selon la revendication 1,
**caractérisée en ce que**
au moins un guide (13) est prévu pour équilibrer au moins une partie du trajet libéré par au moins un élément de stabilisation (8) pendant la phase de pose.

3. Machine agricole de fenaison (1) selon au moins l'une des revendications 1 et/ou 2,
**caractérisée en ce que**
au moins un dispositif de pose (9) est prévu sur le côté arrière du châssis (6) de la machine.

4. Machine agricole de fenaison (1) selon les revendications 1 à 3,
**caractérisée en ce que**
au moins un guide (13) est conçu pour permettre de déplacer l'élément d'appui (11) entre une position de transport et une position de pose.

5. Machine agricole de fenaison (1) selon au moins l'une des revendications précédentes,
**caractérisée en ce que**
la surface de contact (K1) d'au moins un élément d'appui (11) ne se déplace pratiquement pas après le contact au sol pendant la phase de pose.

6. Machine agricole de fenaison (1) selon au moins l'une des revendications précédentes,
**caractérisée en ce que**
le guide (13) a une butée (14) au moins en position de pose, cette butée permettant le mouvement de compensation dans la direction de circulation (F) et dans la direction opposée.

7. Machine agricole de fenaison (1) selon au moins l'une des revendications précédentes,
**caractérisée en ce que**
le guide (13) a une butée (14) qui fixe l'élément d'appui (11) au moins en position de pose.

8. Machine agricole de fenaison (1) selon au moins l'une des revendications précédentes,
**caractérisée en ce que**
le guide (13) comporte un verrouillage (15) qui bloque l'élément d'appui (11) au moins en position de transport.

9. Machine agricole de fenaison (1) selon au moins l'une des revendications précédentes,
**caractérisée en ce que**
au contact de l'élément d'appui (11) avec le sol, le guide (13) arrive dans un segment qui permet au guide (13) d'effectuer le mouvement de compensation.

10. Machine agricole de fenaison (1) selon au moins l'une des revendications précédentes,
**caractérisée en ce que**
l'élément d'appui (11) côté arrière est déplaçable avec l'assistance du dispositif d'un tracteur (Z) entre une position de transport et une position de pose.
